# EUROPEAN PATENT SPECIFICATION

(11) **EP 2 000 370 B1**
(45) Date of publication and mention of the grant of the patent: **13.02.2013**
(21) Application number: 08104262.4
(22) Date of filing: 04.06.2008
(51) Int. Cl.: B60R 21/217

(54) **Side airbag unit with inflator-equipped housing**
Seitenairbageinheit mit Gehäuse mit Gasgenerator
Unité d'airbag latéral avec boîtier équipé d'un gonfleur

(30) Priority: 06.06.2007 JP 2007151015
(43) Date of publication of application: 10.12.2008
(73) Proprietor: Autoliv Development AB, 447 83 Vårgårda (SE)
(72) Inventor: Ishimae, Akira, Yokohama-shi Kanagawa 2220033 (JP); Ohbayashi, Kunio, Yokohama-shi Kanagawa 2220033 (JP)
(74) Representative: Beattie, Alex Thomas Stewart

(56) References cited:
- EP-A2- 0 782 943
- DE-A1-102004 055 757
- DE-U1- 9 408 908
- US-A- 4 964 654

## Description

### [Technical Field]

The invention relates to an inflator-equipped housing for an airbag and a side airbag unit having the inflator-equipped housing structure for installation to the internal region of a seat in a vehicle.

### [Background of the Invention]

An airbag unit for use in a vehicle incorporates an airbag which deploys through inflation by the inflow of gas generated by an inflator. The inflator is attached to and secured by a housing to which the airbag is attached. The gas supplied by the inflator is guided into the airbag through the housing. The inflator normally has a cylindrical shape, and the housing is a normally a hollow cylinder with open ends. The inflator is inserted into the housing through one end and supported therein. The gas generated by the inflator flows along the length of the housing and enters the airbag from the open ends of the housing.

The direction in which the inflated airbag deploys is extremely important for an airbag unit used in a vehicle. This is especially true for a side airbag unit because the airbag must inflate very rapidly into a narrow space between the person sitting in the seat and the side of the vehicle structure. It is possible to more securely set the direction of airbag deployment in a manner that the housing discharges gas toward the desired deploying direction.

Gas discharged in the airbag deployment direction generates thrust to the inflator and housing in the opposite direction of the gas discharge direction. This thrust can pose a problem in regard to transportation and storage of the inflator before it is installed to the vehicle. For example, the inflator is liable to be thermally damaged if exposed to fire or other heat source on transportation, or at the factory where it is made or at the vehicle assembly facility. If the inflator becomes thermally damaged, the gas may be accidentally discharged from the inflator and generate thrust which drives the inflator and housing through the air and thus cause it to become a dangerous projectile.

One solution to this problem has been proposed by Reference Document 1 which describes an inflator, which is not attached to the housing but exists as a separate component. Reference Document 1 of "*JIG FOR TRANSPORTING INFLATOR*" describes a simple structure which has the purpose of preventing the inflator from becoming a projectile should it discharge the gas held therein during transportation as a result of thermal damage. In this structure, a curved cover plate, in which multiple leakage holes have been formed, is fixed to a cylindrical inflator by attachment bands to cover a discharge port which is formed on the inflator, and is spaced apart from the gas discharge port by spacers mounted on the inner surface of the cover plate to allow the part of gas flown from the gas discharge port to escape through the leakage holes.
[Reference Document 1] Japanese unexamined patent publication No.07-69168
[Reference Document 2] DE102004055757A discloses an airbag unit comprising an airbag accommodated in a housing, and a gas generator directly or indirectly connected to the housing. The gas generator has a cylindrical outer wall with several outlet openings, and a bar-form element extends through at least one outlet opening. The bar-form element on the side lying on the inside of the outer wall supports a deformation section which during operation of the gas generator is deformed by increasing pressure and is pushed along on the inner side of the outer wall to close off the outlet opening.

### [Disclosure of the Invention]

### [Shortcomings Resolved by the Invention]

There is a problem with the related art structure in that, while it may be applied to the inflator as an independent component, it cannot be used to the inflator which is attached with the housing. Also, considering that the inflator must be transported with the attachments, additional time and expense are required to remove the spacers, the bands and cover plate before the inflator can be installed to the vehicle.

The present invention has been construed in light of the arforesaid shortcoming in the related art as a side airbag unit with inflator-equipping housing for installation to a vehicle wherein an inflator can be attached with a housing which discharges gas in a desired and specific direction where the airbag inflates and deploys, the thrust generated in a direction opposing the direction of the discharge gas flow can be suppressed should thermal damage to the inflator result in accidental gas discharge, and it can be properly ensured the normal operation capability of the side airbag unit.

### [Means of Resolving Shortcomings]

The inflator-equipped housing for airbag comprises
a cylindrically hollow shaped metal sub-housing having an open gas discharge port at each end;
a cylindrically shaped inflator inserted into the sub-housing through either gas discharge port and secured therein, the inflator having gas guide ports formed in its circumferential wall as means of guiding an airbag inflation gas there through;
a 1st orifice in the sub-housing positioned in proximity to the gas guide ports and substantially facing an airbag deployment direction;
a 2nd orifice in the sub-housing separated from the 1st orifice along an circumferential direction of the sub-housing; and
a plug installed in and sealing the 2nd orifice;
wherein the plug is of thermo-soluble resin, and includes a nipple part which has an external diameter dimensioned to contact with an internal periphery of the 2nd orifice and a flange part which extends from the nipple part and contacts with an internal surface of the sub-housing.

It is preferred that the nipple part of the plug is inserted into the 2nd orifice from the internal side of the sub-housing and protrudes from the external surface of the sub-housing when the flange part is in contact with the internal surface of the sub-housing.

It is preferable that a lip part is formed on the nipple part in order to prevent a removal of the nipple part from the 2nd orifice, and is located at a position outside of the external surface of the sub-housing when the flange part is in contact with the internal surface of the sub-housing by inserting the nipple part into the 2nd orifice from the internal side of the sub-housing so as to protrude it from the external surface of the sub-housing.

It is preferable that protruding ribs are formed at appropriate locations on the interval surface of the sub-housing as means of securing the inflator within the sub-housing.

It is preferable that the nipple part is formed to a substantially same cross section as the 2nd orifice, and the flange part is formed to a substantially same curvature as the inner surface of the sub-housing.

It is preferable that the 2nd orifice is formed at a location opposite to and facing the 1st orifice.

The present invention is a side airbag unit for installation to a vehicle seat comprises
an inflator-equipped housing for airbag installed in the vehicle seat, the inflator-equipped housing being constructed in the above manner;
an inflatable fabric airbag, one end thereof being attached to the inflator through the sub-housing in a deflated folded configuration, and inflating and deploying substantially toward an front of the vehicle from the side of seat when filled with a gas generated by the inflator and guided trough the sub-housing; and
an airbag case in which the folded airbag and inflator-equipped housing are installed, the airbag case having an openable part located in opposition to the 1st orifice in the sub-housing as means of providing an opening by an airbag deployment action.

### [Effect of the Invention]

The present invention of the inflator-equipped housing for an airbag and side airbag unit therewith have the effects that
an inflator can be attached with a housing which discharges gas in a desired and specific direction where the airbag inflates and deploys;
the thrust generated in a direction opposing the direction of the discharge gas flow can be suppressed should thermal damage to the inflator result in accidental gas discharge; and
it can be properly ensured the normal operation capability of the side airbag unit.

### [Brief description of the Drawings]

Fig. 1 is an outline drawing of a side view of a vehicle seat in which the inflator-equipped housing and side airbag unit to which it is attached with the side airbag unit are installed.
Fig. 2 is an oblique exploded assembly view of an embodiment of the inflator-equipped housing, airbag, and airbag case comprising the side airbag unit shown in Fig. 1
Fig. 3 is a cross sectional view (taken through arrow line A-A in Fig. 2) of a preferred embodiment of the inflator-equipped housing.
Fig. 4 is a cross sectional view (taken through arrow line B-B in Fig. 3) of the preferred embodiment of the inflator-equipped housing.
Fig. 5 is a cross sectional view (taken through arrow line C-C in Fig. 4) of the preferred embodiment of the inflator-equipped housing.
Fig. 6 is an oblique view of the plug used by the inflator-equipped housing shown in Fig. 3.
Fig. 7 is a side view of the Fig. 6 plug.
Fig. 8 is a front view of the side airbag unit shown in Fig. 2.
Fig. 9 is a cross sectional view (taken through arrow line D-D in Fig. 8) of the side airbag unit.
Fig. 10 shows three additional configurations of the plug.

### [Preferred Embodiments of the Invention]

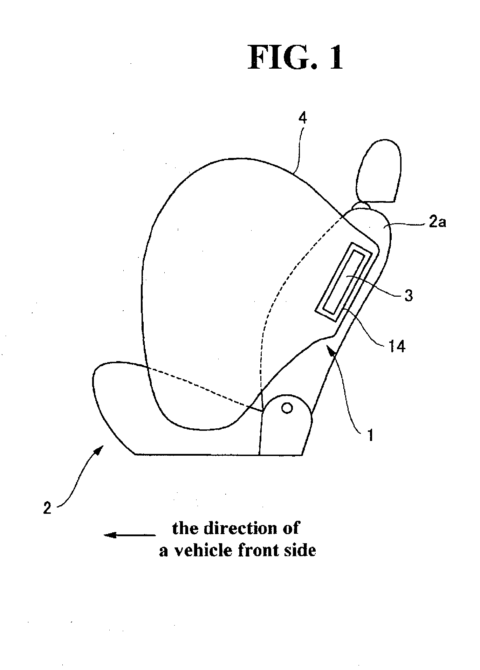

The following will describe a preferred embodiment of the side airbag unit including an inflator-equipped housing with reference to the attached drawings. Fig. 1 illustrates a side airbag unit 1 which is integrally installed to a seat back 2a of a vehicle seat 2, side airbag unit 1 primarily comprising an inflator-equipped housing 3, and a fabric airbag 4 residing within the housing 3 in a folded condition.

In an event that a vehicle receives an impact, an inflator 5 (to be described subsequently) of the side airbag unit 1 generates a gas which flows into the airbag 4 through a sub-housing 6, thus propagating the inflation and deployment of the airbag 4 toward the front of the vehicle from the side of the seat back 2a. Upon activation of the side airbag unit 1, the airbag 4 begins to inflate while concurrently entering the narrow space between the person sitting in the seat 2 and the vehicle itself, and continues to inflate while moving toward the front of the vehicle along the side of the seat 2, thus protecting the person from the shock of the side impact.

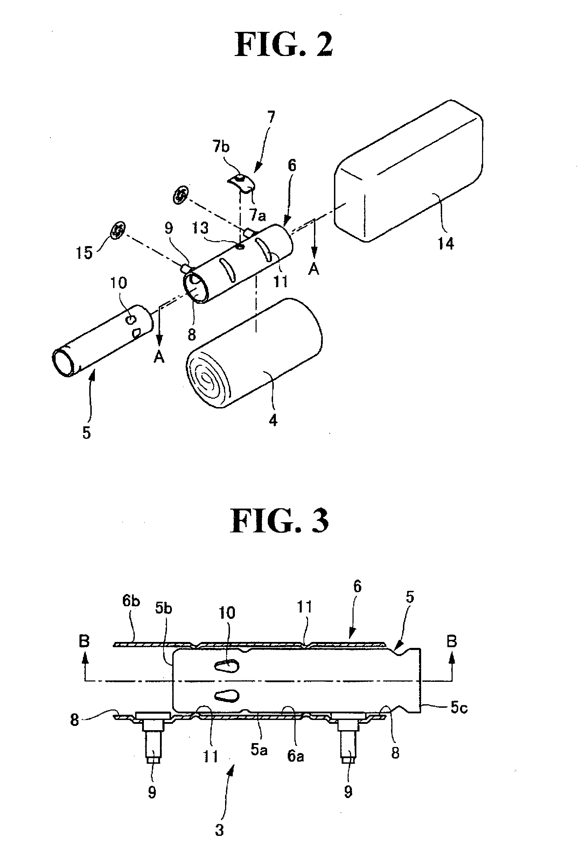

As illustrated in Figs. 2 through 5, the inflator-equipped housing 3 includes the sub-housing 6, the inflator 5, and a plug 7. The sub-housing 6 is a hollow cylindrical metal structure of uniform thickness. While this embodiment describes the sub-housing 6 as a hollow cylinder, it may also be formed as a tube-like structure having angular walls. Both axial ends of the sub-housing 6 are open so as to form gas discharge ports 8. A mounting bolt 9 is installed near each end of the sub-housing 6, each mounting bold 9 protruding outward through the side of the sub-housing 6 in a radial direction. Threaded nuts (not shown in the drawings) are used to secure the mounting bolts 9 to the seat back 2a as means of attaching the sub-housing 6 to the seat back 2a.

The cylindrically shaped inflator 5 resides within the sub-housing 6. In this embodiment, the inflator 5 is cylindrical in shape so as to correspond to the hollow cylindrical space defined within the sub-housing 6. The inflator 5 may also be formed as a tube-like structure with angular walls if the sub-housing 6 were to be structured in the same configuration. The external diameter of the inflator 5 is formed to a slightly smaller dimension than the internal diameter of the sub-housing 6 so as to allow a small gap to exist there between. Multiple radially oriented gas guide ports 10 are formed at an appropriate position in the circumferential wall 5a of the inflator 5. The gas guide ports 10 are provided as means of directing the discharge of inflation gas into the airbag 4.

The inflator 5 is axially aligned to and inserted into the sub-housing 6 from either gas discharge port 8 in a direction toward the opposing gas discharge port 8. As shown in the drawings, the end part 5b of the inflator 5 may be inserted into the sub-housing 6 to an extent whereby the opposing end part 5c remains protruding from the sub-housing 6. The end part 5b may also be inserted up to the gas discharge port 8. Moreover, the end part 5c of the inflator 5 may be enclosed by the sub-housing 6.

Ribs 11 are formed at appropriate points on the inner surface 6a of the sub-housing 6, and protrude into the internal space of the sub-housing 6 as means of maintaining the inflator 5 at a specific location therein. Ribs 11 protrude a distance greater than the gap between the circumferential wall 5a of the inflator 5 and the inner surface 6a of the sub-housing 6. In this embodiment, the ribs 11 are press-formed ridges extending the inside of the sub-housing 6 from the outside thereof. The ribs 11 may be formed by various manners.

A 1st orifice 12 is formed in the wall of the sub-housing 6 in proximity to the gas guide port 10 in the inflator 5. The 1st orifice 12 faces the approximate direction of inflation of the airbag 4. When the side airbag unit 1 is installed to the vehicle, the 1st orifice 12 faces the front of the vehicle from its position on the side of the seat 2. The gas generated by the inflator 5 flows through the gas guide ports 10 and is discharged from the gas discharge ports 8 through the gap between the sub-housing 6 and inflator 5, while concurrently flowing through the 1st orifice 12 in the inflation direction of the airbag 4.

A 2nd orifice 13 is formed in the wall of the sub-housing 6 at a position along the radial circumference separated from the 1st orifice 12. The 2nd orifice 13 is formed to a smaller dimension than the 1st orifice 12, and may be provided in the form of a single orifice or multiple orifices. It is preferable that the 1st and 2nd orifices 12 and 13 are point symmetrical in relation to the axial center of the sub-housing 6, or linear symmetrical along a line at a right angle to the axial centerline of the sub-housing 6. In this embodiment, the 2nd orifice 13 is positioned directly across from the 1 st orifice 12 on the radial axis of the sub-housing 6.

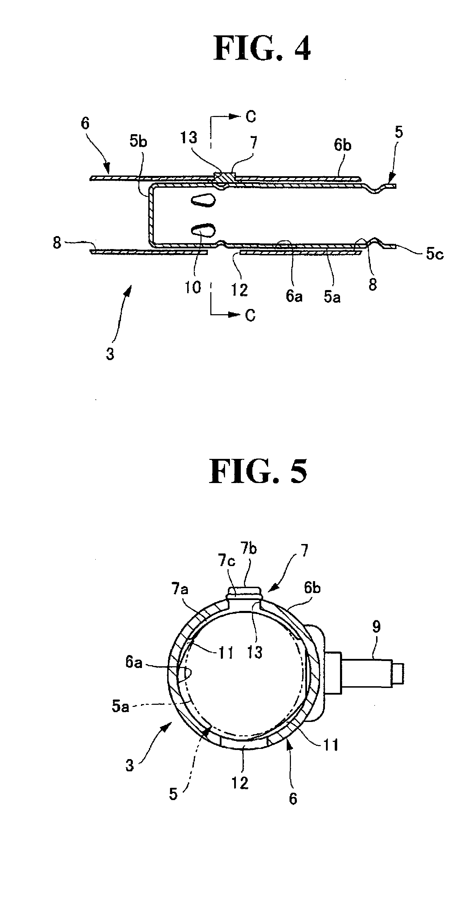

A plug 7 is installed to the 2nd orifice 13 from the internal side of the sub-housing 6. The plug 7 thus forms a seal which prevents gas from flowing out through the 2nd orifice 13. As illustrated in Figs. 5 through 7, the plug 7 is a single structure primarily comprising a flange part 7a and a nipple part 7b integrally formed above the flange part 7a. The entire plug 7 is constructed of a heat fusibility resin which will soften and melt in a high heat environment such as that generated by a fire or other thermal source. The external diameter of the nipple part 7b is formed so as to stick in the inner periphery of the 2nd orifice 13. In other words, the external dimension of the nipple part 7b is made to the approximately same dimension as the 2nd orifice 13. Structurally speaking, the nipple part 7b is formed to a cross section shaped essentially the same as that of the 2nd orifice 13.

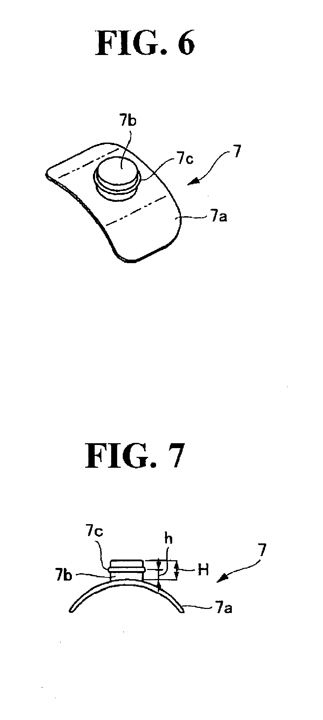

The flange part 7a is formed as an approximately square plate-like structure which extends radially outward beneath the nipple part 7b. The flange part 7a has a curved surface which contacts the internal surface 6a of the sub-housing 6. In other words, the upper surface of the flange part 7a is formed to the same curved profile as that of the internal surface 6a of the sub-housing 6. The flange part 7a is made to a thickness approximately equivalent to that of the gap between the inflator 5 and the sub-housing 6. The nipple part 7b is inserted into the 2nd orifice 13 from the internal side of the sub-housing 6, thus resulting in the upper surface of the flange part 7a coming into contact with the inner surface 6a of the sub-housing 6, and nipple part 7b extending above the external surface 6b of the sub-housing 6 to an extent shown by the letter 'H' in Fig. 7.

A lip part 7c is integrally formed to the nipple part 7b. The lip part 7c is inserted through the 2nd orifice 13 from the internal side of the sub-housing 6, and is separated from the sub-housing external surface 6b distance 'h' (Fig. 7) when the upper surface of the flange part 7a is in contact with the sub-housing inner surface 6a. The lip part 7c is formed as a ring-shaped protrusion extending radially outward from the nipple part 7b. When the upper surface of the flange part 7a contacts the sub-housing inner surface 6a, the lip part 7c engages the sub-housing external surface 6b to form a sandwich-like structure in which the lip part 7c and flange part 7a press oppositely against the sub-housing 6 to secure the plug 7 in place. The installation of the nipple part 7b into the 2nd orifice 13 is secure due to the plug 7 being made from resin.

As illustrated in Figs. 2, 8, and 9, the side airbag unit 1 includes the inflator-equipped housing 3, fabric airbag 4, and an airbag case 14 which contains the airbag 4 and inflator-equipped housing 3. The airbag 4, the structure of which is well known in the art, is in a folded configuration with one extremity fixedly attached to the inflator 5 through the sub-housing 6. In detail, the one extremity of the airbag 4 is attached to the inflator-equipped housing 3 so as to completely envelope the gas discharge ports 8, 1 st orifice 12, and 2nd orifice 13. This structure allows all of the gas discharged from the inflator 5 to enter the airbag 4 through the sub-housing 6, and to inflate the folded airbag 4 to a fully deployed condition.

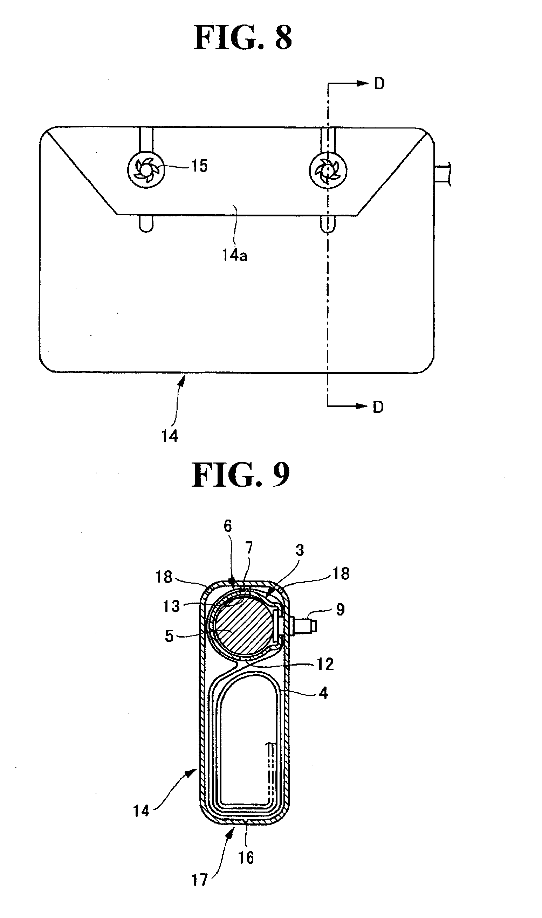

The airbag case 14 is a box-like structure, made of a resin, which includes a cover flap 14a. The folded airbag 4 and the inflator-equipped housing 3 to which the airbag 4 is attached are inserted into the airbag case 14 through the open cover flap 14a. The sub-housing mounting bolts 9 extend outwards through holes formed in the cover flap 14a of the airbag case 14. Nuts 15 fasten to the mounting bolts 9 on the external side of the airbag case 14, and thus serve as means of securing the cover flap 14a in a closed condition while also securing the inflator-equipped housing 3 to the airbag case 14. As shown in the Fig. 9 view, the inflator-equipped housing 3 is located in the upper region of the airbag case 14, while the folded airbag 4 is located in the lower region. Therefore, the 1st orifice 12, which faces toward the direction of the deployment of the airbag 4, is oriented downward.

Separation line 16 is formed in the airbag case 14 at a location substantially opposing the 1st orifice 12. As illustrated in the Fig. 9 orientation, the separation line 16 is formed in an appropriate length on the bottom of the airbag case 14, in the lengthwise direction relative to the inflator-equipped housing 3, so as to oppose the 1st orifice 12. The separation line 16 may comprise a row of intermittent slits or notches, or a thin portion formed in the airbag case 14. The separation line 16 exists as a demarcation line in the airbag case 14 when the airbag 4 remains undeployed, but will become the line of separation along which the airbag case 14 ruptures to form deployment opening 17 by the inflation force when the airbag 4 is deployed. In order that case 14 split open smoothly when the airbag 4 is deployed, it is preferable that a hinge part 18 may be provided at the top of the airbag case 14 (relative to the view in Fig. 9) opposing to the separation line 16. While this embodiment describes the deployment opening 17 being formed from depressed parts along the separation line 16, other structures allowing the separation of the case 14 to be also employed. For example, a pre-formed slit or a hinged door-like structure provided adjacent to the opening is applicable as other means.

The following will describe the operation of the embodiment of the inflator-equipped housing 3. The inflator-equipped housing 3 is handled as a separate component during transport, or stored as a separate component at the factory where it is manufactured or at the vehicle assembly site. Should the inflator-equipped housing 3 be damaged as a result of exposure to excessive heat in case of a fire and so on, the inflation gas will be directed through the gas guide port 10. At the same time, the heat will melt the plug 7 resulting in it being driven out of the 2nd orifice 13. To be specific, at least, the boundary portion between the flange part 7a and nipple part 7b will soften and break as a result of the excessive heat, thus leading to the destruction of the plug 7.

If the ambient heat intensifies, the inflator 5 will reach its ignition point causing the generation and discharge of gas. The gas escaping from the gas guide port 10 will flow into and fill the gap between the sub-housing 6 and inflator 5, and then flow out of the sub-housing 6 through the 1st orifice 12 and the gas discharge ports 8. At the same time, the pressure of the gas will drive the plug 7 out of the sub-housing 6 and thus open the 2nd orifice 13. The opened 2nd orifice 13 allows the escape of the gas there from, resulting in the generation of thrust in a direction counter to that generated by the escape of gas from the 1st orifice 12, thus canceling out a unidirectional thrust applied to the inflator 5. Despite the inflator 5 being attached to the sub-housing 6, in the event that an excessively high ambient temperature damages the inflator 5 resulting in the release of gas there from, this structure makes it possible to counteract the thrust generated by the gas escaping from the 1st orifice 12 in the deployment direction of the airbag 4 by means of thrust generated by the gas escaping from the oppositely located 2nd orifice 13, and thus prevents a strong unidirectional thrust from being applied to the inflator-equipped housing 3.

While gas leakage from the 2nd orifice 13 is prevented due to the external diameter of the nipple part 7b being dimensioned to contact the internal periphery of the 2nd orifice 13, a specific gas pressure applied to the plug 7 will securely drive it out of the 2nd orifice 13. Gas is prevented from flowing between the flange part 7a and the internal surface 6a of the sub-housing 6 due to the two components being in mutual contact. This structure prevents gas from leaking out through the 2nd orifice 13 and the nipple part 7b from being drawn into the sub-housing 6 through the flange part 7a, therefore securely pushing the plug 7 out of the 2nd orifice 13. The effects of this structure are also obtained by resulting in the nipple part 7b assuming the same cross sectional shape of the 2nd orifice 13, and the upper surface of the flange part 7a assuming the same curved profile as that of the internal surface 6a of the sub-housing 6.

Due to the 2nd orifice 13 being located opposite the 1st orifice 12, the thrust generated by the escape of gas from the 2nd orifice 13 counteracts and weakens the thrust generated by the gas escaping from the 1 st orifice 12. In other words, if the 2nd orifice 13 were to be formed in the sub-housing 6 at a location approximately opposing the 1st orifice 12 along the circumferential direction, the thrust generated by gas escaping from the 2nd orifice 13 would have the effect of reducing the thrust generated by the gas escaping from the 1st orifice 12.

Establishing the height 'H' of the nipple part 7b to a dimension whereby the nipple part 7b protrudes from the sub-housing external surface 6b creates a mechanism which facilitates the removal of the nipple part 7b from the 2nd orifice 13. Moreover, the protrusion of the nipple part 7b from the sub-housing external surface 6b allows easy verification of the presence of the plug 7 and also prevents faulty installation. The formation of the lip part 7c on the nipple part 7b also facilitates assembly by preventing the inadvertent removal of the plug 7 from the 2nd orifice 13 during installation and making it easy to secure the plug 7 to the sub-housing 6 in the correct position.

Ribs 11, which are formed on the sub-housing internal surface 6a, have the effect of adequately securing the inflator 5 within the sub-housing 6. Establishing the 2nd orifice 13 to a size slightly smaller than the 1st orifice 12 increases the sealing effect provided by the plug 7. It is preferable that the plug 7 may be made to smaller dimensions as it will hasten the thermal destruction speed at which the nipple part 7b and its surrounding part become thermally damaged and expose the 2nd orifice 13.

The following will explain operation of the side airbag unit 1 which incorporates the inflator-equipped housing 3. It is preferable that the side airbag unit 1 is installed to a vehicle in an orientation wherein the airbag 4 will inflate in the region between the occupant and internal side of the vehicle while deploying toward the front of the vehicle. To do this, the inflator-equipped housing 3 is installed to the seat back 2a so that the 1st orifice 12 faces the front of the vehicle in the region between the occupant and internal side of the vehicle. The inflator-equipped housing 3 is placed in the airbag case 14, with the folded airbag 4 attached, before the installation to the vehicle. The airbag case 14 is then installed within the seat back 2a by secured with reinforcement in the seat back 2a of the seat 2. This is the finished configuration of the vehicular side airbag unit 1.

Should the vehicle receive a severe impact, gas generated by the inflator 5 flows into the airbag 4 from the gas guide port 10 through the sub-housing 6. At this time, the plug 7 remains seated in and sealing the 2nd orifice 13. Most of the gas generated by the inflator 5 flows out from the 1st orifice 12, while some gas also flows out of the gas discharge ports 8 in the sub-housing 6. The thrust generated by the gas flowing out of the 1st orifice 12 is received by the seat back 2a reinforcement, and the pressure of that gas is concentrated along the airbag 4 deployment direction due to the 1st orifice 12 facing the approximate deployment direction. As a result of this mechanism, the airbag 4 inflates and deploys efficiently in predominantly that direction from within the airbag case 14.

The separation line 16, which is formed on the underside of the airbag case 14 and located substantially in opposition to the 1st orifice 12, ruptures by the pressure applied from the inflating airbag 4, thus creating the deployment opening 17 through which the airbag 4 may exit the airbag case 14. The airbag 4 then flies out of the airbag case 14, enters the space between the occupant sitting in the vehicle seat 2 and the internal side of the vehicle, and continues to deploy along the side of the vehicle seat 2 toward the front of the vehicle, and thus cushions the impact applied to the occupant.

Gas is prevented from leaking out of the 2nd orifice 13 during deployment due to the seal provided by the plug 7, thereby promoting fast and efficient deployment of the airbag 4. Because the 1st orifice 12 faces the approximate direction of deployment of the airbag 4, and the separation line 16 is formed directly opposite the 1st orifice 12, the pressure of the gas generated by the inflator 5 can be applied directly in the airbag 4 deployment direction, thus forming a mechanism through which the airbag case 14 opens with a fast and smooth action allowing the airbag 4 to instantaneously enter the space between the occupant and side of the vehicle. The side airbag unit 1 is thus able to offer a superior level of protection to the vehicle occupant.

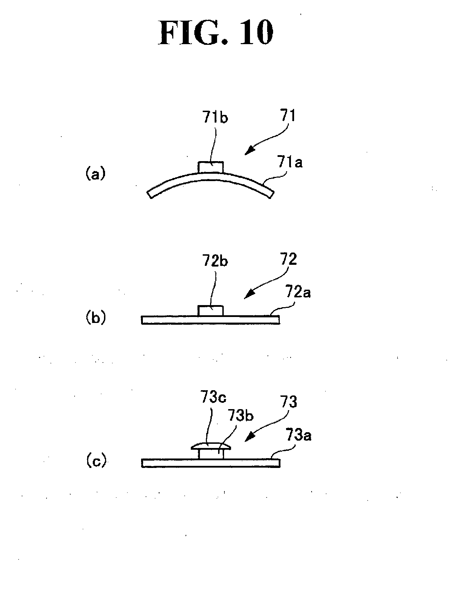

The foregoing embodiment of the inflator-equipped housing, and the side airbag unit to which the inflator-equipped housing is installed, have been provided for the purpose of explanation and are in no way to be construed as limiting the present invention. While the present invention has been described with reference to exemplary embodiments, it is understood that the words which have been used herein are words of description and illustration, rather than words of limitation. Although the present invention has been described with reference to particular structures, materials, and embodiments depicted in the drawings, the present invention is not intended to be limited to the particulars disclosed therein. For example, the previously noted plug 7 may take the form of the plug 71, 72, or 73 shown in Fig. 10. It is permissible that the plug 71 depicted in Fig. 10 (a) does not have a lip part, that the plug 72 shown in Fig. 10 (b) have a flange part 72a formed to a flat configuration rather than curved and also does not have a lip part, and that the plug 73 shown in Fig. 10 (c) have a flat flange part as well as a lip part 73c. Moreover, the nipple part 71b, 72b, or 73b may be established to a dimension in height whereby it at least protrudes from the external surface 6b of the sub-housing 6 when the flange part 71 a, 72a, or 73 a is in contact with the internal surface 6a of the sub-housing 6.

### [Explanation of numerals]

- 1:: side airbag unit
- 2:: vehicle seat
- 3:: inflator-equipped housing
- 4:: airbag
- 5:: inflator
- 6:: sub-housing
- 6a:: sub-housing inner surface
- 6b:: sub-housing external surface
- 7:: plug
- 7a:: flange part
- 7b:: nipple part
- 7c:: lip part
- 8:: gas discharge port
- 10:: gas guide port
- 11:: rib
- 12:: 1 st orifice
- 13:: 2nd orifice
- 14:: airbag case
- 16:: separation line
- 17:: deployment opening

## Claims

1. An inflator-equipped housing (3) for airbag (4) comprising:
a cylindrically hollow shaped metal sub-housing (6) having an open gas discharge port (8) at each end, whereby
a cylindrically shaped inflator (5) inserted into said sub-housing (6) through either gas discharge port (8) and secured therein, said inflator (5) having gas guide ports (10) formed in its circumferential wall as means of guiding an airbag inflation gas there through,
a 1st orifice (12) in said sub-housing (6) positioned in proximity to said gas guide ports (10) and substantially facing an airbag (4) deployment direction,
a 2nd orifice (13) in said sub-housing (6) separated from said 1st orifice (12) along an circumferential direction of said sub-housing (6), and
a plug (7) installed in and sealing said 2nd orifice (13),
wherein said plug (7) is of thermo-soluble resin, and includes a nipple part (7b) which has an external diameter dimensioned to contact with an internal periphery of said 2nd orifice (13) and a flange part (7a) which extends from said nipple part (7b) and contacts with an internal surface (6a) of said sub-housing (6).

2. The inflator-equipped housing (3) according to claim 1 wherein said nipple part (7b) of said plug (7) is inserted into said 2nd orifice (13) from the internal side of said sub-housing (6) and protrudes from the external surface (6b) of said sub-housing (6) when said flange part (7a) is in contact with the internal surface (6a) of said sub-housing (6).

3. The inflator-equipped housing (3) according to claim 1 or 2 wherein a lip part (7c) is formed on said nipple part (7b) in order to prevent a removal of said nipple part (7b) from said 2nd orifice (13), and is located at a position outside of the external surface (6b) of said sub-housing (6) when the flange part (7a) is in contact with the internal surface (6a) of said sub-housing (6) by inserting said nipple part (7b) into said 2nd orifice (13) from the internal side of said sub-housing (6) so as to protrude it from the external surface (6b) of said sub-housing (6).

4. The inflator-equipped housing (3) according to either one of claims 1-3 wherein protruding ribs (11) are formed at appropriate locations on the internal surface (6a) of said sub-housing (6) as means of securing said inflator (5) within said sub-housing (6).

5. The inflator-equipped housing (3) according to either one of claims 1-4 wherein said nipple part (7b) is formed to a substantially same cross section as said 2nd orifice (13), and said flange part (7a) is formed to a substantially same curvature as the inner surface (6a) of said sub-housing (6).

6. The inflator-equipped housing (3) according to either one of claims 1-5 wherein said 2nd orifice (13) is formed at a location opposite to and facing said 1st orifice (12).

7. A side airbag unit (1) for installation to a vehicle seat (2) comprising:
an inflator-equipped housing (3) for airbag (4) installed in said vehicle seat (2), said inflator-equipped housing (3) according to either one of claims 1-6,
an inflatable fabric airbag (4), one end thereof being attached to said inflator (5) through said sub-housing (6) in a deflated folded configuration, and inflating and deploying substantially toward an front of the vehicle from the side of said seat when filled with a gas generated by said inflator (5) and guided through said sub-housing (6), and
an airbag case (14) in which the folded airbag (4) and said inflator-equipped housing (3) are installed, said airbag case (14) having an openable part located in opposition to said 1st orifice (12) in said sub-housing (3) as means of providing an opening (17) by the airbag deployment action.

## Patentansprüche

1. Gehäuse mit Gasgenerator (3) für einen Airbag (4), umfassend:
ein zylindrisch hohles Metall-Untergehäuse (6), das an jedem Ende eine offene Gasaustrittsöffnung (8) aufweist, wobei
ein zylindrischer Gasgenerator (5) durch eine der Gasaustrittsöffnungen (8) in das Untergehäuse (6) eingesetzt ist und darin gesichert ist, wobei der Gasgenerator (5) Gasführungsöffnungen (10) aufweist, die in seiner umlaufenden Wand als Mittel zur Führung eines Airbag-Füllgases durch diese gebildet sind,
eine erste Öffnung (12) im Untergehäuse (6), die in der Nähe von den Gasführungsöffnungen (10) angeordnet ist und im Wesentlichen einer Entfaltungsrichtung des Airbags (4) zugewandt ist,
eine zweite Öffnung (13) im Untergehäuse (6), die entlang einer Umfangsrichtung des Untergehäuses (6) von der ersten Öffnung (12) getrennt ist und
einen Stopfen (7), der in die zweite Öffnung (13) eingebaut ist und diese abdichtet,
wobei der Stopfen (7) aus hitzelöslichem Harz besteht und einen Nippelteil (7b) umfasst, der einen Außendurchmesser aufweist, der so bemessen ist, dass er mit einem inneren Umfang der zweiten Öffnung (13) in Kontakt tritt, und einen Flanschteil (7a), der sich vom Nippelteil (7b) erstreckt und der mit einer inneren Oberfläche (6a) des Untergehäuses (6) in Kontakt tritt.

2. Gehäuse mit Gasgenerator (3) nach Anspruch 1, wobei der Nippelteil (7b) des Stopfens (7) von der inneren Seite des Untergehäuses (6) in die zweite Öffnung (13) eingesetzt ist und von der äußeren Oberfläche (6b) des Untergehäuses (6) hervorsteht, wenn sich der Flanschteil (7a) in Kontakt mit der inneren Oberfläche (6a) des Untergehäuses (6) befindet.

3. Gehäuse mit Gasgenerator (3) nach Anspruch 1 oder 2, wobei ein Lippenteil (7c) am Nippelteil (7b) gebildet ist, um ein Entfernen des Nippelteils (7b) von der zweiten Öffnung (13) zu verhindern, und sich in einer Position außerhalb der äußeren Oberfläche (6b) des Untergehäuses (6) befindet, wenn sich der Flanschteil (7a) mit der inneren Oberfläche (6a) des Untergehäuses (6) durch Einführen des Nippelteils (7b) in die zweite Öffnung (13) von der inneren Seite des Untergehäuses (6) aus in Kontakt befindet, so dass es von der äußeren Oberfläche (6b) des Untergehäuses (6) hervorsteht.

4. Gehäuse mit Gasgenerator (3) nach einem der Ansprüche 1 bis 3, wobei hervorstehende Rippen (11) an geeigneten Stellen auf der inneren Oberfläche (6a) des Untergehäuses (6) als Mittel zur Sicherung des Gasgenerators (5) innerhalb des Untergehäuses (6) gebildet sind.

5. Gehäuse mit Gasgenerator (3) nach einem der Ansprüche 1 bis 4, wobei der Nippelteil (7b) mit einem im Wesentlichen gleichen Querschnitt wie die zweite Öffnung (13) gebildet ist und der Flanschteil (7a) mit einer im Wesentlichen gleichen Krümmung wie die innere Oberfläche (6a) des Untergehäuses (6) gebildet ist.

6. Gehäuse mit Gasgenerator (3) nach einem der Ansprüche 1 bis 5, wobei die zweite Öffnung (13) in einer Position gegenüber der ersten Öffnung (12) und dieser zugewandt gebildet ist.

7. Seitenairbageinheit (1) zum Einbau in einen Fahrzeugsitz (2), umfassend:
ein Gehäuse mit Gasgenerator (3) für einen Airbag (4), der im Fahrzeugsitz (2) eingebaut ist, das Gehäuse mit Gasgenerator (3) nach einem der Ansprüche 1 bis 6,
einen aufblasbaren Gewebeairbag (4), dessen eines Ende durch das Untergehäuse (6) in einer luftleeren, gefalteten Konfiguration am Gasgenerator (5) befestigt ist und sich im Wesentlichen in Richtung einer Vorderseite des Fahrzeuges von der Seite des Sitzes her aufbläst und entfaltet, wenn er mit einem vom Gasgenerator (5) generierten und durch das Untergehäuse (6) geführten Gas gefüllt wird, und
eine Airbaghülle (14), in der der gefaltete Airbag (4) und das Gehäuse mit Gasgenerator (3) eingebaut sind, wobei die Airbaghülle (14) einen gegenüber der ersten Öffnung (12) im Untergehäuse (3) angeordneten Teil aufweist, der geöffnet werden kann, als Mittel zum Bereitstellen einer Öffnung (17) bei der Entfaltung des Airbags.

## Revendications

1. Boîtier équipé d'un gonfleur (3) pour un airbag (4), comprenant :
un sous-boîtier en métal de forme cylindrique creuse (6) possédant un orifice de décharge de gaz ouvert (8) à chaque extrémité, dans lequel
un gonfleur de forme cylindrique (5) est introduit dans ledit sous-boîtier (6) par l'un ou l'autre orifice de décharge de gaz (8) et fixé dans celui-ci, ledit gonfleur (5) possédant des orifices de guidage de gaz (10) formés dans sa paroi circonférentielle en tant que moyens de guidage d'un gaz de gonflage de l'airbag à travers cette dernière,
un premier orifice (12) dans ledit sous-boîtier (6) positionné à proximité desdits orifices de guidage de gaz (10) et faisant sensiblement face à une direction de déploiement de l'airbag (4),
un deuxième orifice (13) dans ledit sous-boîtier (6) séparé dudit premier orifice (12) le long d'une direction circonférentielle dudit sous-boîtier (6), et
un bouchon (7) installé dans et obturant ledit deuxième orifice (13),
dans lequel ledit bouchon (7) est en résine thermosoluble et comporte une partie de téton (7b) dont le diamètre extérieur est dimensionné pour venir en contact avec une périphérie intérieure dudit deuxième orifice (13) et une partie de semelle (7a) qui s'étend depuis ladite partie de téton (7b) et vient en contact avec une surface interne (6a) dudit sous-boîtier (6).

2. Boîtier équipé d'un gonfleur (3) selon la revendication 1, dans lequel ladite partie de téton (7b) dudit bouchon (7) est introduite dans ledit deuxième orifice (13) à partir de la face interne dudit sous-boîtier (6) et dépasse de la surface externe (6b) dudit sous-boîtier (6) lorsque ladite partie de semelle (7a) est en contact avec la surface interne (6a) dudit sous-boîtier (6).

3. Boîtier équipé d'un gonfleur (3) selon la revendication 1 ou la revendication 2, dans lequel une partie de lèvre (7c) est formée sur ladite partie de téton (7b) afin d'empêcher ladite partie de téton (7b) de sortir dudit deuxième orifice (13) et est située dans une position à l'extérieur de la surface externe (6b) dudit sous-boîtier (6) lorsque la partie de semelle (7a) est en contact avec la surface interne (6a) dudit sous-boîtier (6) en introduisant ladite partie de téton (7b) dans ledit deuxième orifice (13) à partir de la face interne dudit sous-boîtier (6) de façon qu'elle dépasse de la surface externe (6b) dudit sous-boîtier (6).

4. Boîtier équipé d'un gonfleur (3) selon l'une quelconque des revendications 1 à 3, dans lequel des nervures saillantes (11) sont formées à des emplacements appropriés sur la surface interne (6a) dudit sous-boîtier (6) en tant que moyens de fixation dudit gonfleur (5) à l'intérieur dudit sous-boîtier (6).

5. Boîtier équipé d'un gonfleur (3) selon l'une quelconque des revendications 1 à 4, dans lequel ladite partie de téton (7b) est formée avec une section transversale sensiblement identique à celle dudit deuxième orifice (13) et ladite partie de semelle (7a) est formée avec une courbure sensiblement identique à celle de la surface interne (6a) dudit sous-boîtier (6).

6. Boîtier équipé d'un gonfleur (3) selon l'une quelconque des revendications 1 à 5, dans lequel ledit deuxième orifice (13) est formé à un emplacement situé à l'opposé et en face dudit premier orifice (12).

7. Unité d'airbag latéral (1) destinée à être installée dans un siège de véhicule (2), comprenant :
un boîtier équipé d'un gonfleur (3) pour un airbag (4) installé dans ledit siège de véhicule (2), ledit boîtier étant équipé d'un gonfleur (3) selon l'une quelconque des revendications 1 à 6,
un airbag en toile gonflable (4) qui est relié à une extrémité audit gonfleur (5) dans ledit sous-boîtier (6) dans une configuration dégonflée repliée et qui se gonfle et se déploie sensiblement en direction de l'avant du véhicule à partir du côté dudit siège lorsqu'il est rempli avec un gaz généré par ledit gonfleur (5) et guidé dans ledit sous-boîtier (6), et
un logement d'airbag (14) dans lequel sont installés l'airbag (4) replié et ledit boîtier équipé d'un gonfleur (3), ledit logement d'airbag (14) possédant une partie qui peut être ouverte, située à l'opposé dudit premier orifice (12) dans ledit sous-boîtier (3), en tant que moyen de créer une ouverture (17) par l'action de déploiement de l'airbag.
